# EUROPEAN PATENT SPECIFICATION

(11) **EP 2 796 080 B1**
(45) Date of publication and mention of the grant of the patent: **16.06.2021**
(21) Application number: 14165840.1
(22) Date of filing: 24.04.2014
(51) Int. Cl.: A47L 15/42

(54) **Dishwasher and sensing module for the same**
Geschirrspülmaschine und Messmodul dafür
Lave-vaisselle et module de détection pour celui-ci

(30) Priority: 25.04.2013 KR 20130046132
(43) Date of publication of application: 29.10.2014
(73) Proprietor: Samsung Electronics Co., Ltd., Suwon-si, Gyeonggi-do 16677 (KR)
(72) Inventor: Kim, Hyoung Jun, Kyungki-Do (KR); Ryu, Ji Suk, Pusan-Si (KR)
(74) Representative: Walaski, Jan Filip

(56) References cited:
- EP-A1- 1 335 060
- EP-A1- 2 233 058
- EP-A2- 1 358 833
- EP-A2- 1 677 085
- US-A- 5 446 531
- US-A1- 2006 237 036

## Description

The present invention relates to a dishwasher that has a sensing module including a water sensing sensor which is disposed in a water collecting portion gathering water to sense the water.

In general, a dishwasher is an apparatus which sprays water onto dishes placed therein to wash the dishes, and includes a main body provided, at a front surface thereof, with an insert hole through which the dishes are inserted, a washing chamber disposed inside the insert hole, a door to open and close the insert hole, a rack disposed within the washing chamber in order to store the dishes, a nozzle unit spraying water onto the dishes put on the rack to wash contaminants off of the dishes, and the like.

In such a dishwasher, the washing chamber is provided, at a lower portion thereof, with a sump to gather water used for dishwashing so that the water is circulated or discharged, and the sump is provided with a pump to drain or circulate water, a heater to heat water, and the like.

In addition, a variety of sensors are arranged within the sump so as to accurately control operations of the dishwasher by checking water accommodated in the sump. These sensors include a water sensing sensor to sense whether or not water is present in the sump, a temperature sensor to sense a temperature of water, a turbidity sensor to sense turbidity of water accommodated in the sump, and the like.

US5446531 A relates to a sensing platform for use in a dishwasher. US2006/237036 A relates to a fill level control system for use in a dishwasher.

Therefore, it is an aspect of the present disclosure to provide a dishwasher having a sensor installation structure capable of more efficiently utilizing an inner space of a sump. Additional aspects of the disclosure will be set forth in part in the description which follows and, in part, will be obvious from the description, or may be learned by practice of the disclosure.

In accordance with the present disclosure, a dishwasher is provided according to claim 1.

The sensing module may be disposed to be spaced apart from a bottom of the water collecting portion.

The sensing module may include a printed circuit board on which the water sensing sensor and the temperature sensor are mounted, and the capacitive sensor may include a first electrode disposed on a first surface of the printed circuit board and a second electrode disposed on a second surface of the printed circuit board opposite to the first surface.

The second electrode and the temperature sensor may be disposed side by side at one end of the printed circuit board.

The printed circuit board may include a slit provided between the second electrode and the temperature sensor.

The sensing module may include a sensor housing accommodating the printed circuit board on which the water sensing sensor and the temperature sensor are mounted.

The sensing module may further include a resin filled in an inner portion of the sensor housing to fill a space between the printed circuit board and the inner portion of the sensor housing.

The sensor housing may include a sensing portion protruding inward of the water collecting portion, the printed circuit board being disposed within the sensing portion, and the water collecting portion may include a through hole provided on a side wall thereof, the sensing portion protruding through the through hole.

The sensor housing may include at least one catching portion protruding from an outer peripheral surface thereof, and the through hole may include a sensing portion passing part through which the sensing portion passes, and at least one catching portion passing part formed in a shape corresponding to the at least one catching portion such that the at least one catching portion passes through the at least one catching portion passing part.

The at least one catching portion may include two catching portions formed in different shapes from each other, and the at least one catching portion passing part may include two catching portion passing parts formed in respective shapes corresponding to the two catching portions.

The sensor housing may include a mounting portion formed to have a larger diameter than the through hole, and the water collecting portion may include a seating portion extending from a part adjacent to the through hole to seat and support the mounting portion.

The dishwasher may further include a sealing member to seal between an inner peripheral surface of the seating portion and an outer peripheral surface of the mounting portion.

The water collecting portion may include a pair of stopper portions to limit a rotation angle of the sensing module, and the sensor housing may include a pair of stopper protrusions which are respectively caught by the pair of stopper portions depending on rotation of the sensing module.

The water collecting portion may include a locking portion protruding in order for the sensing module rotating in one direction to limit rotation in a reverse direction, and the sensor housing may include an elastic hook provided to correspond to the locking portion, the elastic hook being elastically deformed as the sensing module rotates in one direction and being caught by the locking portion.

These and/or other aspects of the disclosure will become apparent and more readily appreciated from the following description of the embodiments, taken in conjunction with the accompanying drawings of which:
FIG. 1 is a cross-sectional view illustrating a dishwasher according to an embodiment of the present disclosure;
FIG. 2 is an exploded perspective view illustrating a sump of the dishwasher according to the embodiment of the present disclosure and a sensing module installed in the sump;
FIG. 3 is an enlarged view of portion A in FIG. 1;
FIG. 4 is an exploded perspective view illustrating the sensing module applied to the dishwasher according to the embodiment of the present disclosure;
FIGS. 5 and 6 are views a form in which a water sensing sensor and a temperature sensor applied to the dishwasher according to the embodiment of the present disclosure are mounted on a printed circuit board;
FIG. 7 is an enlarged view of portion B in FIG. 2;
FIG. 8 is a perspective view illustrating the sensing module applied to the dishwasher according to the embodiment of the present disclosure; and
FIGS. 9 and 10 are perspective views illustrating a process by which the sensing module is installed in the sump in the dishwasher according to the embodiment of the present disclosure.

Hereinafter, a dishwasher according to an embodiment of the present disclosure will be described in detail with reference to the drawings, wherein like reference numerals refer to like elements throughout.

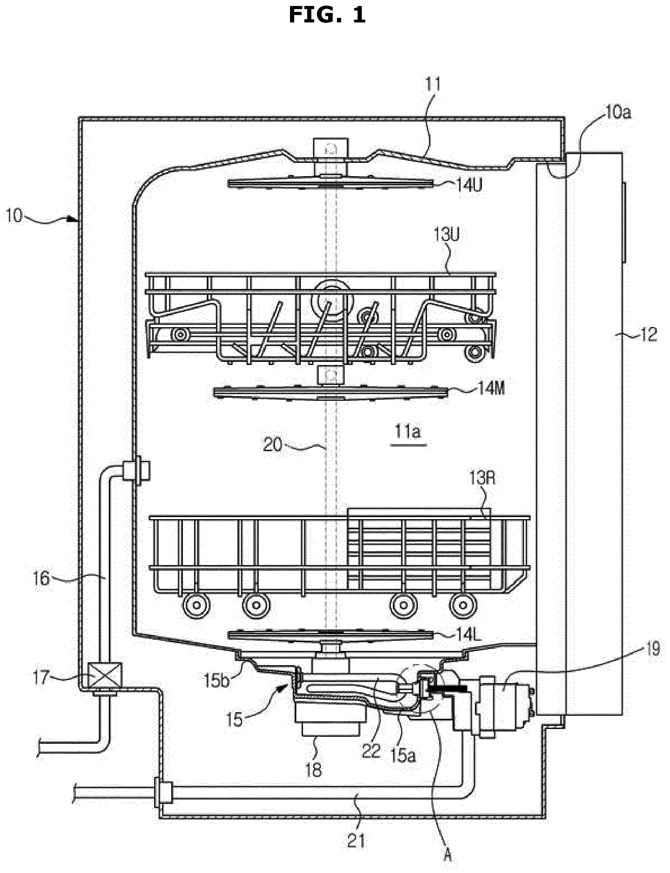

As shown in FIG. 1, a dishwasher according to an embodiment of the present disclosure includes a main body 10 which defines an external appearance thereof and is provided, at a front surface thereof, with an insert hole 10a through which dishes are able to be loaded and unloaded, a washing tub 11 which is disposed inside the insert hole 10a and defines a washing chamber 11a to perform dishwashing, and a door 12 which is rotatably mounted, at a lower end thereof, to a lower portion of main body 10 to open and close the insert hole 10a.

The washing chamber 11a is provided therein with racks 13U and 13L to put dishes and nozzle units 14L, 14U, and 14M to spray water toward the dishes put on the racks 13U and 13L, and a lower portion of the washing chamber 11a is provided with a sump 15 to gather water used for washing.

The racks 13U and 13L are wire racks through which water sprayed from the nozzle units 14L, 14U, and 14M passes while accommodating dishes, and the wire racks are made of wires. The racks 13U and 13L may be vertically arranged at upward and downward sides in the washing chamber 11a. In addition, the racks 13U and 13L may be installed in the washing chamber 11a so as to be movable in a forward and backward direction, so that the racks 13U and 13L are withdrawn through the insert hole 10a from the washing chamber 11a while advancing or are inserted through the insert hole 10a into the washing chamber 11a. Accordingly, the dishes may be put on or taken out of the racks 13U and 13L in a state of withdrawing the racks 13U and 13L from the washing chamber 11a.

The nozzle units 14L, 14U, and 14M include a plurality of nozzles to spray water toward the dishes put on the racks 13U and 13L. In this embodiment, the nozzle units 14L, 14U, and 14M include a lower nozzle unit 14L disposed below the rack 13L arranged at the downward side, an upper nozzle unit 14U disposed above the rack 13U arranged at upward side, and an intermediate nozzle unit 14M disposed between the two racks 13U and 13L. The respective nozzle units 14L, 14U, and 14M are rotatably installed, and spray water toward the dishes put on the two racks 13U and 13L while rotating.

A water supply tube 16 to guide water from an external source (not shown) to the washing chamber 11a is connected to the rear side of the washing tub 11, and the water supply tube 16 is provided with a water supply valve 17 to selectively open and close the water supply tube 16.

The sump 15 serves to gather water supplied through the water supply tube 16 into the washing chamber 11a or water sprayed from the nozzle units 14L, 14U, and 14M. The sump 15 includes a water collecting portion 15a recessed downward to gather water, and a guide portion 15b connected to the lower portion of the washing tub 11 to guide water to the water collecting portion 15a.

The water collecting portion 15a is provided with a circulation pump 18 which transfers water gathered in the water collecting portion 15a to the nozzle units 14L, 14U, and 14M to circulate the water, and a drain pump 19 to discharge the water gathered in the water collecting portion 15a to the outside. The drain pump 19 is connected with a drain tube 21 to guide water from the drain pump 19 to the outside, and the circulation pump 18 is connected with a circulation tube 20 to guide water to the nozzle units 14L, 14U, and 14M.

In addition, the water collecting portion 15a is provided therein with a heater 22 to heat water and a variety of sensors.

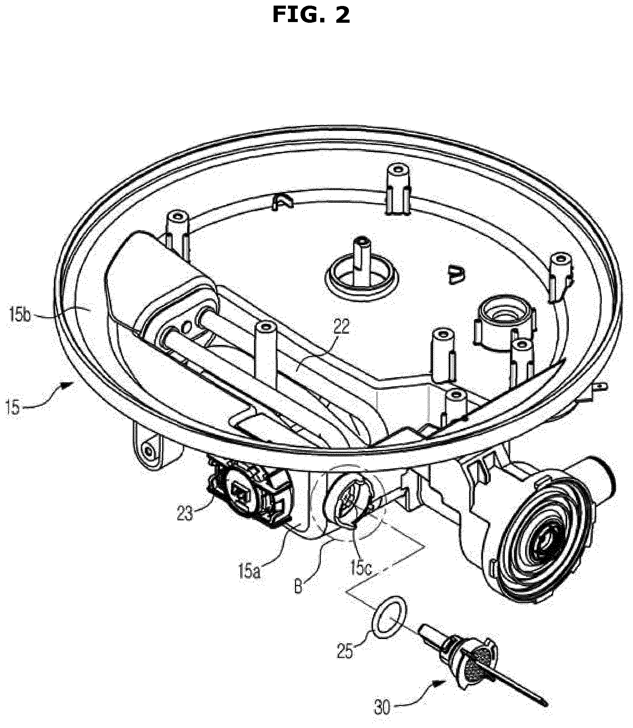

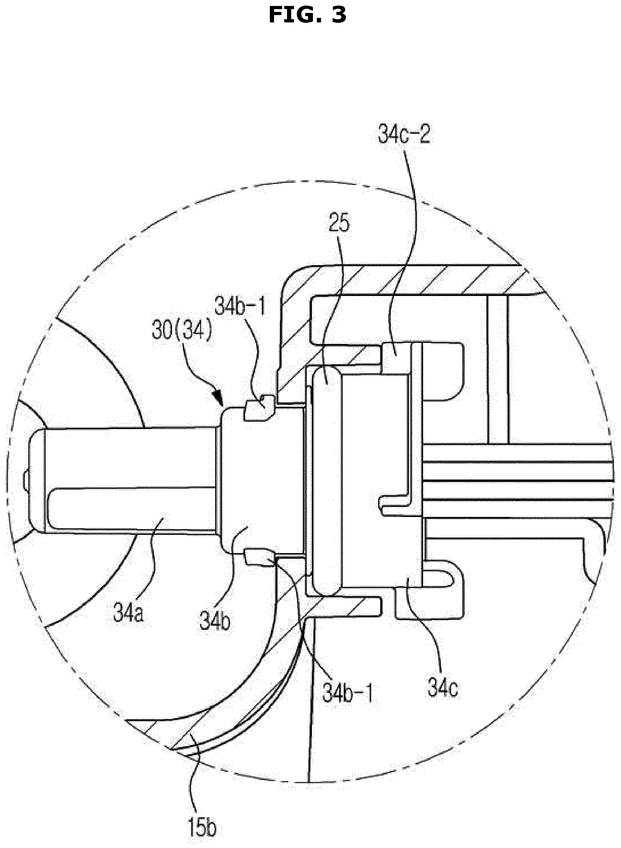

As shown in FIGS. 2 to 6, the sensors installed to the water collecting portion 15a may include a turbidity sensor 23 to identify turbidity of water accommodated in the water collecting portion 15a, a water sensing sensor 31 to identify whether or not water is filled to a certain water level or more in the water collecting portion 15a, and a temperature sensor 32 to sense a temperature of water accommodated in the water collecting portion 15a.

According to one embodiment, the water sensing sensor 31 and the temperature sensor 32 may be incorporated into one sensing module 30 and installed to the water collecting portion 15a. Accordingly, in a case in which the water sensing sensor 31 and the temperature sensor 32 are incorporated into the sensing module 30, since, depending on installation of the sensing module 30 to the water collecting portion 15a, the water sensing sensor 31 and the temperature sensor 32 are simultaneously installed to the water collecting portion 15a without each individual installation of the water sensing sensor 31 and the temperature sensor 32, it may be possible to easily install the water sensing sensor 31 and the temperature sensor 32 and to efficiently utilize an inner space of the limited water collecting portion 15a.

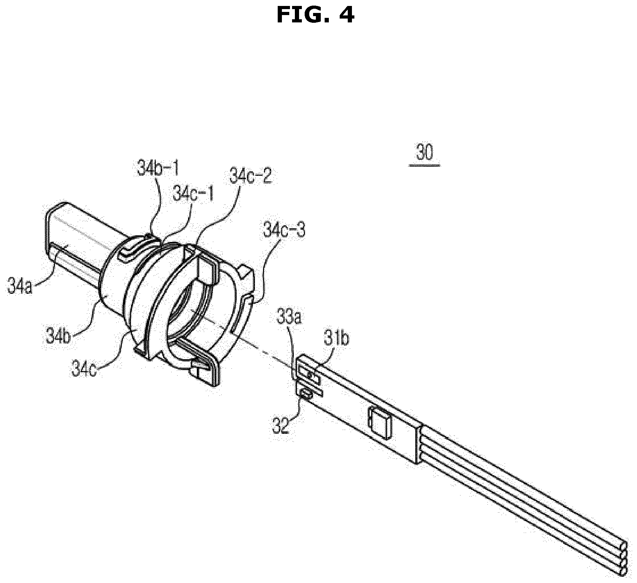

As shown in FIG. 4, the sensing module 30 includes one printed circuit board 33 on which the water sensing sensor 31 and the temperature sensor 32 are mounted, a sensor housing 34 accommodating the printed circuit board 33 on which the water sensing sensor 31 and the temperature sensor 32 are mounted, and a sealing member 25 which is installed to the sensor housing 34 to prevent leakage of water from between the sensor housing 34 and a seating portion 15e, to be described later, together with the above-mentioned water sensing sensor 31 and the temperature sensor 32. By accommodating the printed circuit board 33 in a space within the sensor housing 34 and then injecting and condensing a molten resin, the printed circuit board 33 is fixed in the sensor housing 34 while a space between an inner surface of the sensor housing 34 and the printed circuit board 33 is filled with the resin.

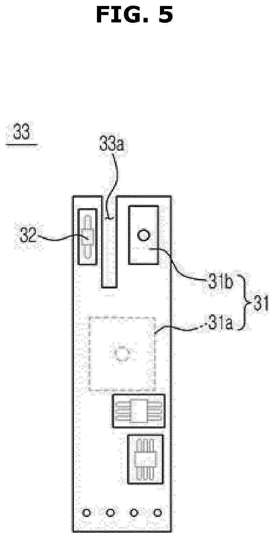

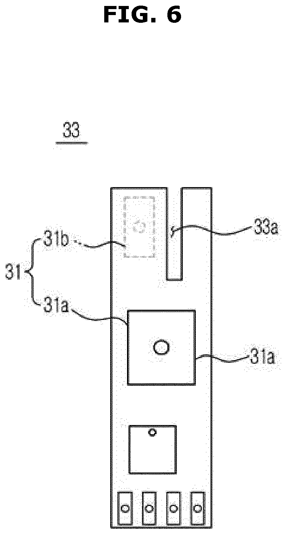

The printed circuit board 33 may be configured of a double-sided printed circuit board on both sides of which circuit patterns are formed. As shown in FIGS. 5 and 6, the water sensing sensor 31 is configured of a capacitive sensor which includes a first electrode 31a disposed on a first surface of the printed circuit board 33 and a second electrode 31b disposed on a second surface of the printed circuit board 33 opposite to the first surface. Each of the first and second electrodes 31a and 31b maybe formed in a metal plate shape, the first electrode 31a may be disposed at a central side on the first surface of the printed circuit board 33, and the second electrode 31b and the temperature sensor 32 may be disposed side by side at one end side on the second surface of the printed circuit board 33.

The other end side of the printed circuit board 33 may be provided with connection portions 33b, and wires for signal transmission and power supply are connected to the connection portions 33b. In addition, the printed circuit board 33 may be provided with a slit 33a partitioning between the second electrode 31b and the temperature sensor 32, it maybe possible to prevent operations of the second electrode 31b and the temperature sensor 32 from interfering with each other.

The above-mentioned capacitive sensor is a sensor to sense a change in capacitance depending on a change in dielectric constant between the two electrodes spaced apart from each other. When the water sensing sensor 31 configured of a capacitive sensor is incorporated into the sensing module 30 and then the sensing module 30 is installed to the water collecting portion 15a, a dielectric substance between the first electrode 31a and the second electrode 31b is changed depending on a level of water filled in the water collecting portion 15a, and thus capacitance between the first electrode 31a and the second electrode 31b is changed. Accordingly, it may be possible to identify whether or not water is filled to a certain water level or more in the water collecting portion 15a through such a change in capacitance.

As described above, when both the water sensing sensor 31 and the temperature sensor 32 are mounted on one printed circuit board 33 and signal transmission and reception and power supply in the water sensing sensor 31 and the temperature sensor 32 are performed through one printed circuit board 33, an installation structure and a connection structure of the water sensing sensor 31 and the temperature sensor 32 are simplified, thereby enabling the sensing module 30 to be configured more compactly.

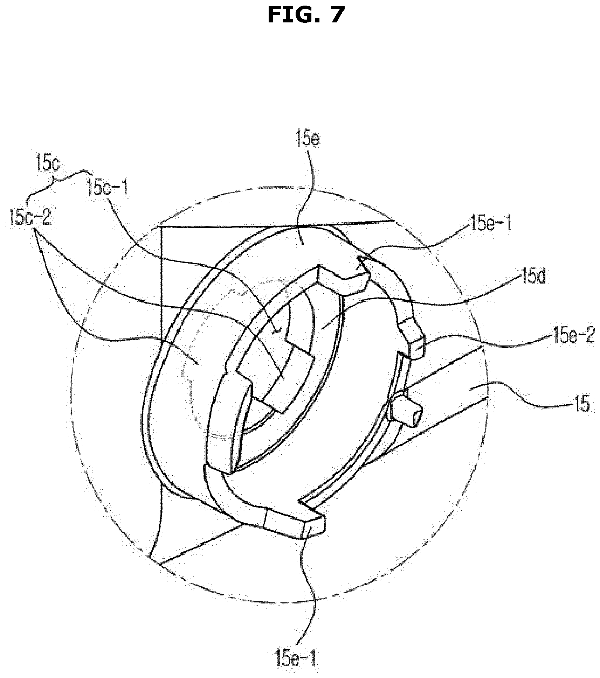

As shown in FIG. 7, the water collecting portion 15a is provided with a through hole 15c arranged to install the sensing module 30, and a seating portion 15e extending from a part adjacent to the through hole 15c to the outside so as to seat a mounting portion 34c of the sensor housing 34, to be described later. In addition, the part adjacent to the through hole 15c is formed with a catching jaw 15d protruding inward of the seating portion 15e to catch and support the mounting portion 34c.

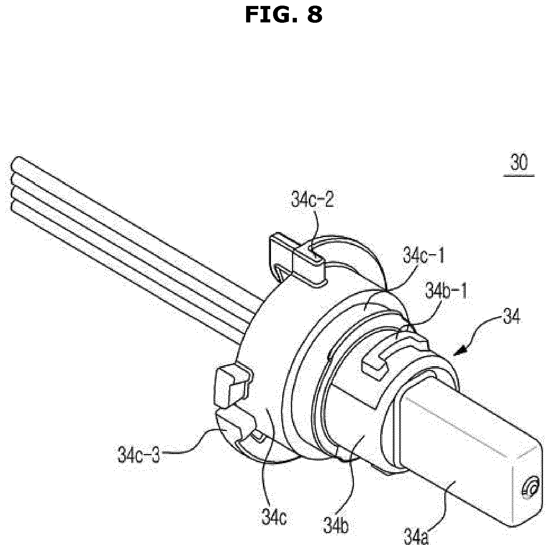

As shown in FIG. 8, the sensor housing 34 may integrally include a sensing portion 34a which protrudes inward of the water collecting portion through the through hole 15c to come into contact with water filled in the water collecting portion 15e, a through portion 34b which may be formed to have a circular cross-section and rests on an inner surface of the through hole 15c, and a mounting portion 34c seated to the above-mentioned seating portion 15e to maintain a state in which the sensing module 30 is installed to the water collecting portion 15a.

The sensing portion 34a accommodates therein one end of the printed circuit board 33 on which the water sensing sensor 31 and the temperature sensor 32 are mounted, and thus senses whether or not water is present and the temperature of water.

The through portion 34b may include a catching portion 34b-1 protruding from an outer peripheral surface thereof. The catching portion 34b-1 passes through the through hole 15c, and then rests on a part adjacent to the through hole 15c of the water collecting portion 15a depending on rotation of the sensing module 30, thereby maintaining a state in which the through portion 34b is installed to the through hole 15c. In this embodiment, the catching portion 34b-1 includes two catching portions 34b-1 which are spaced apart from each other in a circumferential direction, and the two catching portions 34b-1 are formed to have different lengths from each other in the circumferential direction.

Meanwhile, the through hole 15c provided in the water collecting portion 15a includes a sensing portion passing part 15c-1 through which the sensing portion 34a passes, and catching portion passing parts 15c-2 arranged in shapes corresponding to the catching portions 34b-1 at both sides of the sensing portion passing part 15c-1. Accordingly, the two catching portions 34b-1 may pass through the two catching portion passing parts 15c-2 only when the sensing module 30 is installed to the through hole 15c at a certain angle.

The mounting portion 34c is formed to have a larger diameter than the through hole 15c so as to be caught and supported by the above-mentioned catching jaw 15d, and includes a sealing member installation portion 34c-1 to which the sealing member 25 is installed.

In addition, the seating portion 15e is provided with stopper portions 15e-1 protruding to limit a rotation angle of the sensing module 30 rotating as described above, and the mounting portion 34c is provided with stopper protrusions 34c-2 corresponding to the stopper portions 15e-1. Consequently, when the sensing module 30 rotates, the two stopper protrusions 34c-2 are caught by the two stopper portions 15e-1 such that the rotation angle of the sensing module 30 is limited to a certain degree or less. In this embodiment, the two stopper portions 15e-1 are formed at the seating portion 15e to be spaced in the circumferential direction, and the two stopper protrusions 34c-2 are formed at the mounting portion 34c to be spaced in the circumferential direction such that the two stopper protrusions 34c-2 correspond to the two stopper portions 15e-1.

In addition, the seating portion 15e is formed, at a fore end thereof, with a locking portion 15e-2 protruding in order for the sensing module 30 rotating in one direction to limit rotation in a reverse direction. The mounting portion 34c of the sensor housing 34 is provided with an elastic hook 34c-3 arranged to correspond to the locking portion 15e-2, and the elastic hook 34c-3 is elastically deformed depending on the rotation of the sensing module 30 and is caught by the locking portion 15e-2.

The sealing member 25 is formed of an O-ring made of an elastically deformable material, and is installed to the above-mentioned sealing member installation portion 34c-1. Accordingly, when the sensing module 30 is installed to the water collecting portion 15a and the mounting portion 34c is inserted into the seating portion 15e after the sealing member 25 is installed to the sealing member installation portion 34c-1 of the mounting portion 34c, a gap between the outer peripheral surface of the mounting portion 34c and the inner peripheral surface of the seating portion 15e is sealed by the sealing member 25. Therefore, leakage of water from the through hole 15c is prevented.

A process of installing the sensing module 30 having the above-mentioned structure to the water collecting portion 15a is as follows.

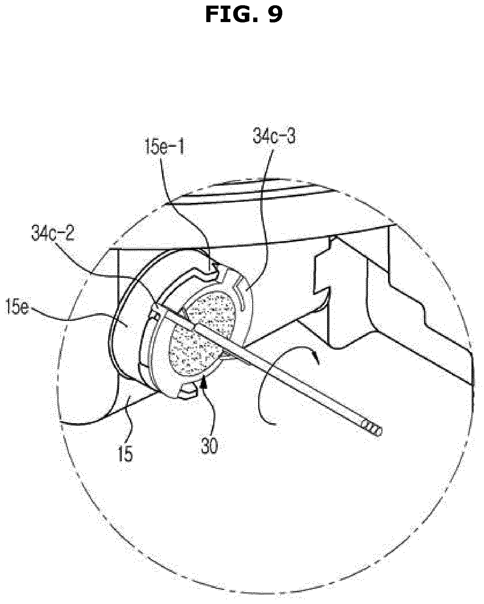

First, when the sensing module 30 is inserted into the through hole 15c at a certain angle such that the two catching portions 34b-1 may pass through the two catching passing parts 15c-2, the two catching portions 34b-1 pass through the two corresponding catching passing parts 15c-2, respectively, and the mounting portion 34c enters inside the seating portion 15e to be caught by the catching jaw 15d, as shown in FIG. 9.

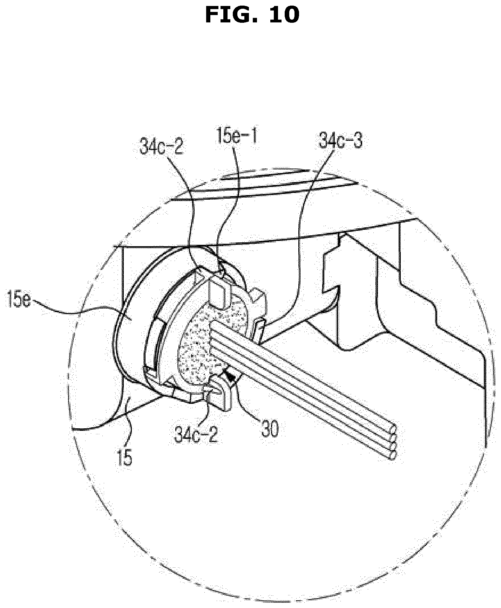

In this state, when the sensing module 30 rotates in one direction as shown in FIG. 10, the two catching portion 34b-1 rest on the inner surface of the water collecting portion 15a adjacent to the through hole 15c. In addition, since the stopper protrusions 34c-2 provided in the sensor housing 34 are caught by the stopper portions 15e-1 provided in the water collecting portion 15a during the rotation of the sensing module 30, the rotation of the sensing module 30 is limited and the sensing module 30 rotates only by a preset angle.

In addition, when the sensing module 30 rotates in one direction, the elastic hook 34c-3 is temporarily elastically deformed and is then returned to an original position to be thereby caught by the locking portion 15e-1. Therefore, the sensing module 30 is prevented from rotating in a reverse direction until a certain force or more is applied to the sensing module 30.

The two catching portions 34b-1 and the two catching portion passing parts 15c-2 are formed to have different lengths from each other in the circumferential direction, but the present disclosure is not limited thereto. For example, the two catching portions 34b-1 may be formed to have different shapes from each other, and the two catching portion passing parts 15c-2 maybe formed to have respective shapes corresponding to the two catching portions 34b-1, whereby the sensing module 30 may also be installed to the water collecting portion 15a at a certain angle.

Hereinafter, an operation of the dishwasher according to the present disclosure having the above-mentioned configuration will be described.

When the dishwasher is operated after dishes are put on the racks 13U and 13L within the washing tub 11, water is supplied from the external source through the water supply tube 16 into the washing chamber 11a, and the supplied water is gathered in the water collecting portion 15a provided at the lower portion of the washing chamber 11a.

When water is filled to a certain water level or more in the water collecting portion 15a, the water sensing sensor 31 incorporated into the sensing module 30 senses whether or not water is present around the sensing module 30. When presence of water is sensed, the circulation pump 18 is operated. Water gathered in the water collecting portion 15a according to the operation of the circulation pump 18 is transferred to the nozzle units 14L, 14U, and 14M, and water transferred to the nozzle units 14L, 14U, and 14M is sprayed onto the dished put on the racks 13U and 13L through the nozzles to wash contaminants off of the dishes.

The operation of the circulation pump 18 is stopped after the dishwashing is completed, and the drain pump 19 is operated to discharge water gathered in the water collecting portion 15 through the drain tube 21 to the outside. When water in the water collecting portion 15 is lowered to a certain water level or less, the water sensing sensor 31 incorporated into the sensing module 30 senses whether or not water is present around the sensing module 30. When presence of water is not sensed, the operation of the circulation pump 19 is stopped and the dishwashing is completed.

In this embodiment, the sensing module 30 having the above-mentioned configuration is disposed to be spaced apart from the bottom of the sump 15 by a certain distance. Accordingly, water is sensed by the water sensing sensor 31 arranged in the sensing module 30 only in a state in which the water is filled to a certain water level or more within the sump 15. This serves to prevent the following issue. Water in the sump 15 is difficult to be perfectly discharged under the structure of the dishwasher, and thus residual water may be unavoidably present in the lower portion of the sump 15. Therefore, it may be misidentified that water is filled in the sump when the above residual water is sensed by the sensing module 30. Accordingly, such an issue is prevented by the above-mentioned structure.

Although the water sensing sensor 31 is configured of a capacitive sensor in this embodiment, the present disclosure is not limited thereto. For example, the sensing module 30 may employ any other type of proximity sensor together with the temperature sensor 32 so as to be operated as the water sensing sensor 31 and the temperature sensor 32.

Although all of the water sensing sensor 31 and the temperature sensor 32 are mounted on the printed circuit board 33 and the sensing module 30 simultaneously serves as the water sensing sensor 31 and the temperature sensor 32, the present disclosure is not limited thereto. For example, even when a sensing module 30 operated only as the water sensing sensor 31 without having a configuration corresponding to the temperature sensor 32 is applied to the present disclosure, the sensing module 30 may have a more compact size by arranging the first electrode 31a and the second electrode 31b at both sides of the printed circuit board 33.

As is apparent from the above description, since a water sensing sensor may be realized by a capacitive sensor having a first electrode and a second electrode arranged on both sides of a printed circuit board in a sensing module applied to a dishwasher, the size of the water sensing sensor may be reduced and thus the sensing module may have a compact size.

In addition, one sensing module is installed to a sump and may sense whether or not water is present and the temperature of water, so that an inner space of the sump may be efficiently utilized.

Although a few embodiments of the present invention have been shown and described, it would be appreciated by those skilled in the art that changes may be made in these embodiments without departing from the principles of the invention, the scope of which is defined in the claims.

## Claims

1. A dishwasher comprising:
a washing chamber (11a) to perform dishwashing;
a water collecting portion (15a) provided at a lower portion of the washing chamber to gather water used for washing; and
a sensing module (30) which is disposed in the water collecting portion and integrally comprises a water sensing sensor (31) to sense whether or not water is present and a temperature sensor (32) to sense a temperature of water, wherein the water sensing sensor comprises a capacitive sensor.

2. The dishwasher according to claim 1, wherein the sensing module (30) is disposed to be spaced apart from a bottom of the water collecting portion (15a).

3. The dishwasher according to claim 1 or 2, wherein:
the sensing module (30) comprises a printed circuit board (33) on which the water sensing sensor (31) and the temperature sensor (32) are mounted; and
the capacitive sensor comprises a first electrode (31a) disposed on a first surface of the printed circuit board and a second electrode (31b) disposed on a second surface of the printed circuit board opposite to the first surface.

4. The dishwasher according to claim 3, wherein the second electrode (31b) and the temperature sensor (32) are disposed side by side at one end of the printed circuit board (33).

5. The dishwasher according to claim 4, wherein the printed circuit board (33) comprises a slit (33a) provided between the second electrode (31b) and the temperature sensor (32).

6. The dishwasher according to any one of claims 3 to 5, wherein the sensing module (30) comprises a sensor housing (34) accommodating the printed circuit board (33) on which the water sensing sensor (31) and the temperature sensor are mounted (32).

7. The dishwasher according to claim 6, wherein the sensing module (30) further comprises a resin filled in an inner portion of the sensor housing (34) to fill a space between the printed circuit board (33) and the inner portion of the sensor housing.

8. The dishwasher according to claim 6 or 7, wherein:
the sensor housing (34) comprises a sensing portion (34a) protruding inward of the water collecting portion (15a), the printed circuit board (33) being disposed within the sensing portion; and
the water collecting portion (15a) comprises a through hole (15c) provided on a side wall thereof, the sensing portion protruding through the through hole.

9. The dishwasher according to claim 8, wherein:
the sensor housing (34) comprises at least one catching portion (34b-1) protruding from an outer peripheral surface thereof; and
the through hole (15c) comprises a sensing portion passing part (15c-1) through which the sensing portion (34a) passes, and at least one catching portion passing part (15c-2) formed in a shape corresponding to the at least one catching portion such that the at least one catching portion passes through the at least one catching portion passing part.

10. The dishwasher according to claim 9, wherein:
the at least one catching portion (34b-1) comprises two catching portions formed in different shapes from each other; and
the at least one catching portion passing part (15c-2) comprises two catching portion passing parts formed in respective shapes corresponding to the two catching portions.

11. The dishwasher according to claim 8, 9 or 10, wherein:
the sensor housing (34) comprises a mounting portion (34c) formed to have a larger diameter than the through hole (15c); and
the water collecting portion (15a) comprises a seating portion (15e) extending from a part adjacent to the through hole to seat and support the mounting portion.

12. The dishwasher according to claim 11, further comprising a sealing member (25) to seal between an inner peripheral surface of the seating portion (15e) and an outer peripheral surface of the mounting portion (34c).

13. The dishwasher according to claim 9, wherein:
the water collecting portion (15a) comprises a pair of stopper portions (15e-1) to limit a rotation angle of the sensing module (30); and
the sensor housing (34) comprises a pair of stopper protrusions (34c-2) which are respectively caught by the pair of stopper portions depending on rotation of the sensing module.

14. The dishwasher according to claim 9, wherein:
the water collecting portion (15a) comprises a locking portion (15e-2) protruding in order for the sensing module (30) rotating in one direction to limit rotation in a reverse direction; and
the sensor housing (34) comprises an elastic hook (34c-2) provided to correspond to the locking portion, the elastic hook being elastically deformed as the sensing module rotates in one direction and being caught by the locking portion.

## Patentansprüche

1. Geschirrspülmaschine, die Folgendes aufweist:
eine Spülkammer (11a) zum Durchführen von Geschirrspülen;
einen Wassersammelteil (15a), der an einem unteren Teil der Spülkammer bereitgestellt ist, zum Sammeln von zum Spülen verwendetem Wasser; und
ein Sensormodul (30), das im Wassersammelteil angeordnet ist und integral einen Wassererfassungssensor (31) zum Erfassen, ob Wasser vorhanden ist oder nicht, und einen Temperatursensor (32) zum Erfassen einer Wassertemperatur aufweist, wobei der Wassererfassungssensor einen kapazitiven Sensor umfasst.

2. Geschirrspülmaschine nach Anspruch 1, wobei das Erfassungsmodul (30) so angeordnet ist, dass es von einem Boden des Wassersammelteils (15a) beabstandet ist.

3. Geschirrspülmaschine nach Anspruch 1 oder 2, wobei:
das Erfassungsmodul (30) eine Platine (33) aufweist, auf der der Wassererfassungssensor (31) und der Temperatursensor (32) montiert sind; und
der kapazitive Sensor eine erste Elektrode (31a), die auf einer ersten Oberfläche der Platine angeordnet ist, und eine zweite Elektrode (31b), die auf einer der ersten Oberfläche entgegengesetzten zweiten Oberfläche der Platine angeordnet ist, aufweist.

4. Geschirrspülmaschine nach Anspruch 3, wobei die zweite Elektrode (31b) und der Temperatursensor (32) Seite an Seite an einem Ende der Platine (33) angeordnet sind.

5. Geschirrspülmaschine nach Anspruch 4, wobei die Platine (33) einen Schlitz (33a) aufweist, der zwischen der zweiten Elektrode (31b) und dem Temperatursensor (32) bereitgestellt ist.

6. Geschirrspülmaschine nach einem der Ansprüche 3 bis 5, wobei das Erfassungsmodul (30) ein Sensorgehäuse (34) aufweist, das die Platine (33) aufnimmt, auf der der Wassererfassungssensor (31) und der Temperatursensor (32) montiert sind.

7. Geschirrspülmaschine nach Anspruch 6, wobei das Erfassungsmodul (30) ferner ein Kunstharz aufweist, das in einen Innenteil des Sensorgehäuses (34) eingefüllt ist, um einen Zwischenraum zwischen der Platine (33) und dem Innenteil des Sensorgehäuses zu füllen.

8. Geschirrspülmaschine nach Anspruch 6 oder 7, wobei:
das Sensorgehäuse (34) einen Erfassungsteil (34a) aufweist, der einwärts des Wassersammelteils (15a) vorsteht, wobei die Platine (33) innerhalb des Erfassungsteils angeordnet ist; und
der Wassersammelteil (15a) eine Durchgangsbohrung (15c) aufweist, die an einer Seitenwand davon bereitgestellt ist, wobei das Erfassungsteil durch die Durchgangsbohrung vorsteht.

9. Geschirrspülmaschine nach Anspruch 8, wobei:
das Sensorgehäuse (34) wenigstens einen Rastteil (34b-1) aufweist, der von einer äußeren Umfangsfläche davon vorsteht; und
die Durchgangsbohrung (15c) einen Erfassungsteildurchgangsbereich (15c-1), durch den hindurch der Erfassungsteil (34a) verläuft, und wenigstens einen Rastteildurchgangsbereich (15c-2), der in einer Form ausgebildet ist, die dem wenigstens einen Rastteil entspricht, so dass der wenigstens eine Rastteil durch den wenigstens einen Rastteildurchgangsbereich verläuft, aufweist.

10. Geschirrspülmaschine nach Anspruch 9, wobei:
der wenigstens eine Rastteil (34b-1) zwei Rastteile aufweist, die in voneinander verschiedenen Formen ausgebildet sind; und
der wenigstens eine Rastteildurchgangsbereich (15c-2) zwei Rastteildurchgangsbereiche aufweist, die in jeweiligen Formen entsprechend den zwei Rastteilen ausgebildet sind.

11. Geschirrspülmaschine nach Anspruch 8, 9 oder 10, wobei:
das Sensorgehäuse (34) einen Montageteil (34c) aufweist, der so ausgebildet ist, dass er einen größeren Durchmesser als die Durchgangsbohrung (15c) hat; und
der Wassersammelteil (15a) einen Sitzteil (15e) aufweist, der sich von einem an die Durchgangsbohrung angrenzenden Bereich zum Aufsetzen und Tragen des Montageteils erstreckt.

12. Geschirrspülmaschine nach Anspruch 11, die ferner ein Dichtungselement (25) zum Abdichten zwischen einer inneren Umfangsfläche des Sitzteils (15e) und einer äußeren Umfangsfläche des Montageteils (34c) aufweist.

13. Geschirrspülmaschine nach Anspruch 9, wobei:
der Wassersammelteil (15a) ein Paar Anschlagteile (15e-1) zum Beschränken eines Drehungswinkels des Erfassungsmoduls (30) aufweist; und
das Sensorgehäuse (34) ein Paar Anschlagvorsprünge (34c-2) aufweist, die je nach der Drehung des Erfassungsmoduls jeweilig an dem Paar Anschlagteile verrastet werden.

14. Geschirrspülmaschine nach Anspruch 9, wobei:
der Wassersammelteil (15a) einen Sperrteil (15e-2) aufweist, der vorsteht, damit das sich in einer Richtung drehende Erfassungsmodul (30) die Drehung in einer Rückwärtsrichtung beschränkt; und
das Sensorgehäuse (34) einen elastischen Haken (34c-2) aufweist, der bereitgestellt ist, um dem Sperrteil zu entsprechen, wobei der elastische Haken bei Drehung des Erfassungsmoduls in einer Richtung und bei Verrasten an dem Sperrteil elastisch verformt wird.

## Revendications

1. Lave-vaisselle, comprenant :
une chambre de lavage (11a) pour réaliser un lavage de vaisselle ;
une partie de collecte d'eau (15a) située au niveau d'une partie inférieure de la chambre de lavage pour collecter l'eau utilisée pour le lavage ; et
un module de détection (30) qui est disposé dans la partie de collecte d'eau et qui comprend intégralement un capteur de détection d'eau (31) pour détecter si de l'eau est présente ou non et un capteur de température (32) pour détecter une température de l'eau, le capteur de détection d'eau comprenant un capteur capacitif.

2. Lave-vaisselle selon la revendication 1, dans lequel le module de détection (30) est disposé de manière à être séparé d'un fond de la partie de collecte d'eau (15a).

3. Lave-vaisselle selon la revendication 1 ou 2, dans lequel :
le module de détection (30) comprend une carte de circuit imprimé (33) sur laquelle sont montés le capteur de détection d'eau (31) et le capteur de température (32) ; et
le capteur capacitif comprend une première électrode (31a) disposée sur une première surface de la carte de circuit imprimé et une seconde électrode (31b) disposée sur une seconde surface de la carte de circuit imprimé, opposée à la première surface.

4. Lave-vaisselle selon la revendication 3, dans lequel la seconde électrode (31b) et le capteur de température (32) sont disposés côte à côte au niveau d'une extrémité de la carte de circuit imprimé (33).

5. Lave-vaisselle selon la revendication 4, dans lequel la carte de circuit imprimé (33) comprend une fente (33a) située entre la seconde électrode (31b) et le capteur de température (32).

6. Lave-vaisselle selon l'une quelconque des revendications 3 à 5, dans lequel le module de détection (30) comprend un boîtier de capteur (34) qui reçoit la carte de circuit imprimé (33) sur laquelle sont montés le capteur de détection d'eau (31) et le capteur de température (32).

7. Lave-vaisselle selon la revendication 6, dans lequel le module de détection (30) comprend en outre une résine de remplissage dans une partie interne du boîtier de capteur (34) pour remplir un espace entre la carte de circuit imprimé (33) et la partie interne du boîtier de capteur.

8. Lave-vaisselle selon la revendication 6 ou 7, dans lequel :
le boîtier de capteur (34) comprend une partie de détection (34a) qui fait saillie vers l'intérieur de la partie de collecte d'eau (15a), la carte de circuit imprimé (33) étant disposé à l'intérieur de la partie de détection ; et
la partie de collecte d'eau (15a) comprend un trou traversant (15c) situé sur une paroi latérale correspondante, la partie de détection faisant saillie par le trou traversant.

9. Lave-vaisselle selon la revendication 8, dans lequel :
le boîtier de capteur (34) comprend au moins une partie de capture (34b-1) qui fait saillie depuis une surface périphérique externe correspondante ; et
le trou traversant (15c) comprend une pièce de passage de partie de détection (15c-1) par laquelle passe la partie de détection (34a) et au moins une pièce de passage de partie de capture (15c-2) qui se présente sous une forme qui correspond à l'au moins une partie de capture, de sorte que l'au moins une partie de capture passe par l'au moins une pièce de passage de partie de capture.

10. Lave-vaisselle selon la revendication 9, dans lequel :
l'au moins une partie de capture (34b-1) comprend deux parties de capture qui se présentent sous des formes différentes l'une de l'autre ; et
l'au moins une pièce de passage de partie de capture (15c-2) comprend deux pièces de passage de partie de capture qui se présentent sous des formes respectives qui correspondent aux deux parties de capture.

11. Lave-vaisselle selon la revendication 8, 9 ou 10, dans lequel :
le boîtier de capteur (34) comprend une partie de montage (34c) formée de manière à avoir un diamètre plus grand que le trou traversant (15c) ; et
la partie de collecte d'eau (15a) comprend une partie d'assise (15e) qui s'étend depuis une pièce adjacente au trou traversant pour permettre l'assise et le support de la partie de montage.

12. Lave-vaisselle selon la revendication 11, comprenant en outre un élément d'étanchéité (25) pour assurer l'étanchéité entre une surface périphérique interne de la partie d'assise (15e) et une surface périphérique externe de la partie de montage (34c).

13. Lave-vaisselle selon la revendication 9, dans lequel :
la partie de collecte d'eau (15a) comprend une paire de parties d'arrêt (15e-1) pour limiter un angle de rotation du module de détection (30) ; et
le boîtier de capteur (34) comprend une paire de protubérances d'arrêt (34c-2) qui sont capturées respectivement par la paire de parties d'arrêt en fonction de la rotation du module de détection.

14. Lave-vaisselle selon la revendication 9, dans lequel :
la partie de collecte d'eau (15a) comprend une partie de verrouillage (15e-2) qui fait saillie afin de limiter la rotation du module de détection (30), en rotation dans un sens, dans le sens inverse ; et
le boîtier de capteur (34) comprend un crochet élastique (34c-2) situé de manière à correspondre à la partie de verrouillage, le crochet élastique étant déformé élastiquement quand le module de détection tourne dans un sens et étant capturé par la partie de verrouillage.
